(19)

**Europäisches Patentamt**
**European Patent Office**
**Office européen des brevets**

(11)     **EP 1 766 233 B1**

(12)                          **FASCICULE DE BREVET EUROPEEN**

(45) Date de publication et mention
de la délivrance du brevet:
**01.04.2009 Bulletin 2009/14**

(21) Numéro de dépôt: **05789963.5**

(22) Date de dépôt: **05.07.2005**

(51) Int Cl.:
***F03G 7/08*** *(2006.01)*

(86) Numéro de dépôt international:
**PCT/FR2005/050542**

(87) Numéro de publication internationale:
**WO 2006/005886 (19.01.2006 Gazette 2006/03)**

(54) **DISPOSITIF DE RECUPERATION D'ENERGIE**

ENERGIERÜCKGEWINNUNGSVORRICHTUNG

ENERGY RECOVERY DEVICE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **06.07.2004 FR 0451454**

(43) Date de publication de la demande:
**28.03.2007 Bulletin 2007/13**

(73) Titulaire: **COMMISSARIAT A L'ENERGIE
ATOMIQUE
75015 Paris (FR)**

(72) Inventeurs:
• **CHAILLOUT, Jean-Jacques
F-38960 SAINT ETIENNE DE CROSSEY (FR)**

• **DESPESSE, Ghislain
38120 Saint Egreve (FR)**
• **JAGER, Thomas
F-38000 GRENOBLE (FR)**
• **VASSILEV, Andréa
F-38000 GRENOBLE (FR)**

(74) Mandataire: **Poulin, Gérard et al
BREVALEX
3, rue du Docteur Lancereaux
75008 Paris (FR)**

(56) Documents cités:
**WO-A-01/26204          WO-A-02/095908
DE-A1- 19 929 341       DE-U1- 29 618 105
US-A- 4 539 813**

EP 1 766 233 B1

**Description**

## DOMAINE TECHNIQUE

La présente invention concerne les systèmes capables de récupérer de l'énergie provenant des mouvements de leur environnement (vibrations, chocs, écoulements, ...) et basés sur le principe d'une masse en suspension effectuant des mouvements relatifs par rapport à cet environnement.

## ÉTAT DE LA TECHNIQUE ANTÉRIEURE

Le principe de la génération d'énergie par mouvement relatif entre deux dispositifs est connu par exemple du document EP-A-0 008 237. Il a été appliqué pour la récupération de l'énergie d'un système mobile, par exemple dans le document GB-A-2 311 171 : une partie lourde, généralement externe, est fixée rigidement (vissage, collage, ...) à un support en mouvement, et une partie mobile légère, généralement interne, est reliée à la partie fixe par une liaison souple. La partie mobile, en suspension, effectue du fait de son inertie un déplacement relatif par rapport à la partie fixe, donc au support ; un convertisseur transforme l'énergie mécanique récupérée en la forme d'énergie voulue, qui peut être quelconque (électrique, thermique, mécanique, ...), en utilisant tout type de conversion. Par exemple, dans le cas des convertisseurs électriques, le principe de conversion peut être électromagnétique, capacitif, électrostatique, piézoélectrique, ou autres.

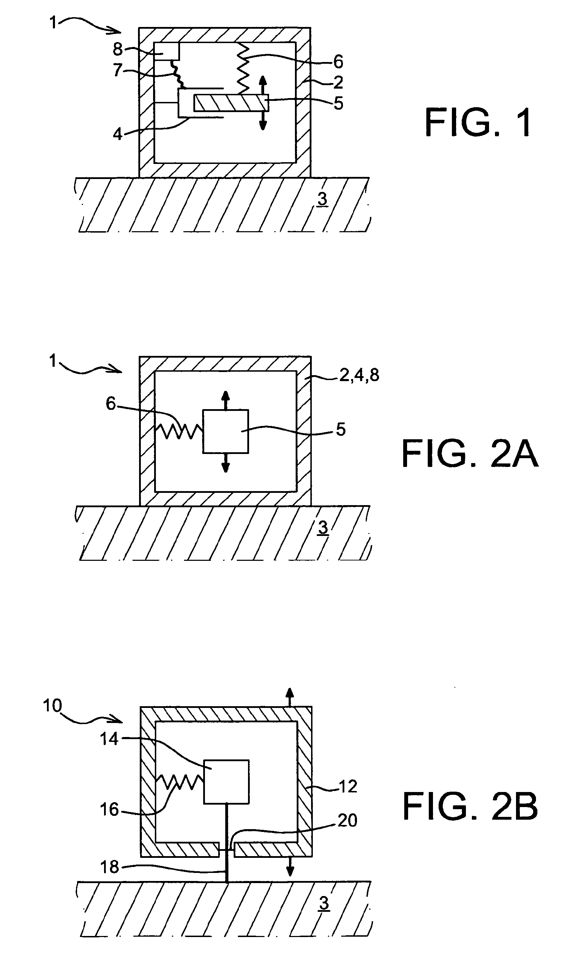

La figure 1 illustre un exemple particulier concernant une conversion de l'énergie mécanique en énergie électrique par principe capacitif. Le dispositif 1 comprend un boîtier 2 fixé à un support 3 qui subit des vibrations. A l'intérieur du boîtier 2 est localisé un système de conversion d'énergie consistant en deux électrodes 4, 5. La première électrode 4 est solidarisée au boîtier 2 de façon rigide ; la deuxième électrode 5 est solidarisée au boîtier de façon souple, par l'intermédiaire d'un ressort 6. Le déplacement relatif des deux électrodes 4, 5 modifie la valeur de la capacité et permet, par l'intermédiaire d'une connectique 7, de générer une énergie électrique dans le système d'exploitation 8.

Cependant, quelles que soient la nature et les performances du convertisseur d'énergie, comme la partie mobile des dispositifs actuels est généralement incluse dans la partie fixe, ils ne peuvent pas récupérer d'énergie provenant de mouvements autres que ceux d'un support auquel ils sont connectés : par exemple, le mouvement d'un fluide les entourant ne peut être transformé en énergie.

Par ailleurs, ces dispositifs connus ont des rendements de récupération faibles. Il a été noté que, de fait, l'énergie récupérable par ce genre de dispositif est limitée par la masse de la partie mobile.

En effet, à titre d'exemple en se plaçant dans le cadre du convertisseur électrique par principe capacitif de la figure 1, l'équation du mouvement s'exprime par:

$$m.z'' + f(b_e, b_m, z', z'') + k_m.z = -m.a(t) \;\; ;$$

avec

    $m$ : masse de la partie mobile 5,
    $z$ : déplacement relatif entre la partie mobile et le support vibrant,
    $a(t)$ : accélération du support vibrant,
    $k_m$ : raideur du ressort 6 de rappel,
    $b_e$ : amortissement électrique de la force électrique entre les électrodes 4 et 5,
    $b_m$ : amortissement mécanique visqueux (éventuel).

D'autre part, l'énergie récupérable correspond à l'énergie cinétique de la masse de la partie mobile selon :

$$E_{recup} = \frac{1}{2} m.z'^2 .$$

La récupération d'énergie dans le système aval se traduit donc comme un amortissement mécanique d'origine électrique (coefficient $b_e$). Du fait que, pour les systèmes connus, la masse de la partie mobile est plus légère que celle de la partie fixe, leurs énergies massiques ou volumiques sont peu compétitives.

Le DE 29 618 105 U concerne un dispositif de récupération d'énergie mécanique, et sa transformation en énergie électrique et est plus particulièrement adapté pour un système de dynamo classique sur une bicyclette par exemple. En particulier, le seul dispositif décrit fonctionne sur le principe électromagnétique et comprend deux parties 2, 3 mobiles l'une par rapport à l'autre, reliées par des premiers moyens de connexion 6. Dans le seul exemple illustré, la partie mobile 3, 6, 8 a une masse inférieure à la masse de la partie fixe 1, 2.

Le document DE 19 929 341 traite de l'alimentation en énergie électrique de capteurs ou actuateurs 1.x qui sont localisés sur un boîtier 2 comprenant des éléments en mouvement. L'alimentation électrique est réalisée sans fil par l'intermédiaire de l'énergie de ces éléments en mouvement. Ce document ne donne aucune information sur les masses relatives des parties du dispositif permettant la transformation de l'énergie en énergie électrique.

## EXPOSÉ DE L'INVENTION

L'invention se propose de pallier ces inconvénients des dispositifs existants et, entre autres avantages, de récupérer plus d'énergie par un dispositif à suspension, en particulier à volume constant.

Sous l'un de ses aspects, l'invention concerne un dispositif comprenant deux parties reliées et mobiles l'une par rapport à l'autre, une des parties étant munie de moyens pour être connectée de façon rigide à un support. La partie munie des moyens de connexion rigide est de masse inférieure à l'autre partie du dispositif. Ainsi l'énergie récupérée, directement reliée à la masse de la partie mobile, est accrue.

La partie mobile est composée d'un boîtier dans lequel la partie fixe est localisée. Une liaison rigide peut traverser le boîtier pour fixer le dispositif à un support ; des moyens d'étanchéité au niveau du passage de cette liaison rigide peuvent être prévus. En particulier dans ce cas, la partie en mouvement est également sensible aux mouvements autres que ceux du support.

Avantageusement, la partie mobile comprend d'autres éléments, comme des systèmes de conversion, de stockage d'énergie, ... que le boîtier, ce qui permet encore d'augmenter la différence de poids entre les deux parties. En particulier, une antenne peut être présente à l'extérieur du boîtier.

Le dispositif selon l'invention peut être adapté à tout type de conversion : mécanique/mécanique, mécanique/thermique, mécanique/électrique par principe piézoélectrique, mécanique/électrique par principe capacitif, etc.

Selon l'invention, le dispositif peut être utilisé en étant connecté à un support mobile, par exemple subissant des vibrations. Il peut également être utilisé dans un environnement où le fluide l'entourant est en mouvement : l'énergie mécanique de ces mouvements peut aussi être récupérée et transformée.

## BRÈVE DESCRIPTION DES DESSINS

Les figures annexées permettront de mieux comprendre l'invention, mais ne sont données qu'à titre indicatif et ne sont nullement restrictives.

La figure 1, déjà décrite, illustre un dispositif connu de récupération d'énergie mécanique par principe capacitif.

Les figures 2A et 2B montrent les principes de fonctionnement de dispositifs de récupération d'énergie, respectivement selon l'art antérieur et selon l'invention.

Les figures 3A-3D représentent diverses applications du principe de récupération selon l'invention.

La figure 4 illustre l'utilisation d'un dispositif selon un mode de réalisation de l'invention dans un environnement de fluide en mouvement.

## EXPOSÉ DÉTAILLÉ DE MODES DE RÉALISATION PARTICULIERS

Tel que schématisé sur la figure 2A, le principe sur lequel reposent les dispositifs 1 de récupération d'énergie connus est la solidarisation d'une partie 2, 4, 8 à un support mobile 3, et la mise en place d'une liaison souple 6 entre cette partie « fixe » 2 et un élément 5, qui est donc mobile par rapport à elle et au support. L'élément en suspension 5 est habituellement composé d'une masselotte ou d'un lest, alors que la partie fixe comprend souvent un boîtier 2 ainsi que des systèmes 4, 8 de transfert d'énergie. Dans les systèmes conventionnels 1, la partie fixe 2, 4, 8 est de fait de masse très supérieure à la partie mobile 5 qui par ailleurs est alourdie par des charges inutiles pour augmenter l'énergie récupérée.

L'énergie récupérée étant directement fonction de la masse sollicitée, il est proposé d'intervertir les rôles mécaniques du dispositif et de la masselotte : contrairement à la pratique courante, la partie auparavant fixée à l'objet en mouvement est libérée, alors que la partie autrefois en suspension est fixée à l'objet en mouvement.

Le dispositif 10 selon l'invention, représenté en figure 2B, comprend donc une première partie 12 et une deuxième partie 14 reliées de façon mobile par des premiers moyens de liaison 16. La deuxième partie 14 est par ailleurs munie de deuxièmes moyens de liaison 18 qui permettent de la connecter de façon rigide à un support 3. La première partie 12 est, conformément à l'invention, de masse supérieure à la deuxième partie 14.

De façon préférée et tel qu'illustré, la première partie comprend un boîtier 12 à l'intérieur duquel se trouve la deuxième partie 14. Dans ce cas, les deuxièmes moyens de liaison peuvent être un arbre mécanique 18 qui traverse le boîtier 12 ; cette liaison rigide peut être réalisée par tout autre moyen, en particulier non mécanique comme une liaison magnétique ou électrostatique. Selon l'utilisation, il peut être avantageux de disposer, entre la partie mobile 12 et l'arbre fixe 18, un système d'étanchéité 20, par exemple une membrane souple, afin par exemple de protéger l'intérieur du dispositif 10 et/ou de guider le déplacement relatif entre première et deuxième parties 12, 14.

La partie fixe 14 par rapport au support 3 peut, selon l'invention, n'intégrer qu'un des éléments actifs du système de conversion d'énergie alors que la masse en mouvement n'est plus limitée par l'encombrement de l'intérieur du dispositif 10. En conséquence, toute masse additionnelle sur la partie mobile 12 a un effet bénéfique sur la puissance récupérable puisque plus la masse en mouvement relatif sera importante, plus la puissance récupérable sera grande.

De manière non exhaustive, les masses additionnelles à celle du boîtier 12 de la première partie peuvent être la partie électronique du système de conversion et/ou d'exploitation d'énergie, une unité de stockage de l'énergie servant de tampon énergétique, son électronique de gestion, le capot de l'ensemble du système, et voir même un capteur complet avec son système de communication sans fil, par exemple un capteur de température qui émettrait de temps en temps la température qu'il fait à proximité du dispositif 10 ou d'une partie de celui-ci. La masse en mouvement peut ainsi augmenter de plusieurs ordres de grandeur, ce qui accroît directement dans la même proportion l'énergie récupérable, et ce sans modification ni redimensionnement du convertisseur 10 d'énergie, qui garde le même encombrement.

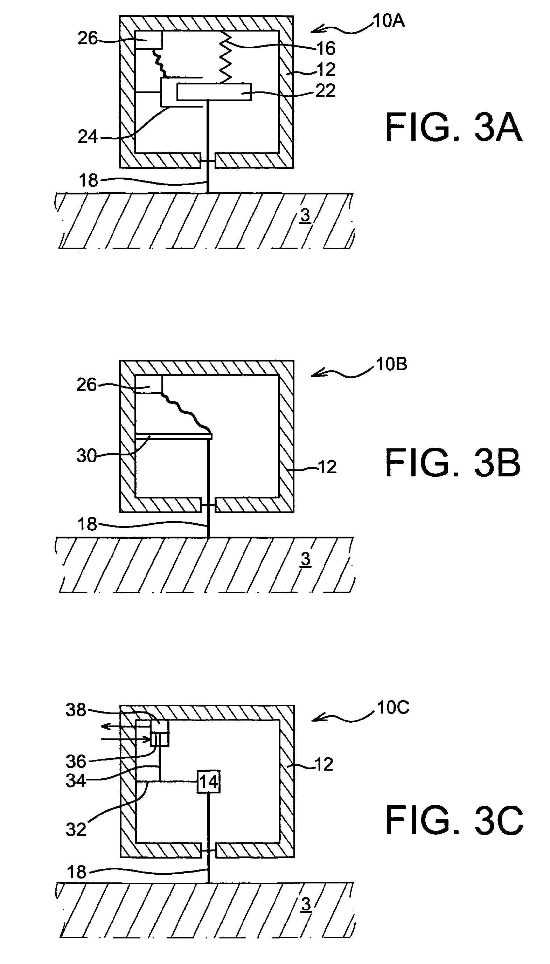

Le dispositif 10 selon l'invention peut concerner tous les principes connus de conversion d'énergie mécanique. Par exemple, tel que schématisé sur la figure 3A, le principe précédent illustré en figure 1 peut être utilisé : la deuxième partie fixe du dispositif 10A comprend ainsi une électrode 22 formant un système de conversion d'énergie avec une autre électrode 24 qui est solidarisée au boîtier 12. Le boîtier comprend en outre un système d'exploitation électrique 26 relié à l'électrode 24. La première partie 12, 24, 26 est reliée de façon mobile à la deuxième partie 22, par exemple par un système faisant ressort 16.

Une autre possibilité pour transformer l'énergie mécanique du support 3 en énergie électrique concerne le principe piézoélectrique illustré en figure 3B : la partie fixe est ici constituée par l'extrémité de l'arbre de connexion 18, qui est reliée au boîtier 12 par l'intermédiaire d'un bras 30 composé, partiellement ou totalement, de matériau piézoélectrique. L'énergie électrique produite par le mouvement relatif entre le boîtier 12 et l'arbre 18 est transmise à un système d'exploitation électrique 26 via une connectique électrique. On note ici que la différence de masse entre la partie fixe et la partie mobile du dispositif 10B est optimale et que la présence de lest sur le bras piézoélectrique 30, obligatoire dans le cas d'un dispositif fonctionnant selon le principe connu illustré en figure 2A, n'est pas nécessaire pour récupérer une tension électrique élevée.

Pour les deux dispositifs 10A et 10B, il est en outre possible de ne pas exploiter directement l'énergie électrique récupérée, mais de la stocker, par un système comme une batterie, un condensateur, etc. qui peut également être solidarisé au boîtier 12 afin d'augmenter encore la différence de masse entre parties fixe et mobile.

Le dispositif selon l'invention peut également transformer l'énergie mécanique en énergie mécanique, par exemple par pompage de fluide. Sur la figure 3C, la deuxième partie est, ici encore, constituée d'une masselotte 14 solidarisée au support 3 par l'arbre rigide 18. Les premiers moyens de connexion entre la partie fixe 14 et la partie mobile sont composés d'un bras articulé ou souple 32 qui transmet le mouvement vers un deuxième bras 34 qui permet d'actionner un piston 36 localisé, dans le cas représenté, à l'intérieur d'une chambre 38 comportant deux valves d'admission : lorsque le piston 36 monte, il ferme la valve d'admission et comprime le fluide dans la chambre 38, permettant ainsi l'ouverture de la valve d'extraction et l'éjection du fluide. Lorsque le piston 36 descend, la pression baisse dans la chambre 38, ce qui fait s'ouvrir la valve d'admission du fluide qui pénètre dans la chambre 38. Un tel dispositif 10C permet donc le pompage d'un fluide grâce aux mouvements relatifs d'une partie mobile par rapport à un support 3. Ici encore, la partie mobile comprend par exemple le boîtier 12, l'articulation 34, le piston 36, la chambre 38, ... dont la masse est supérieure à la partie solidaire du support 3 composée de la masselotte 14 et de l'arbre 18.

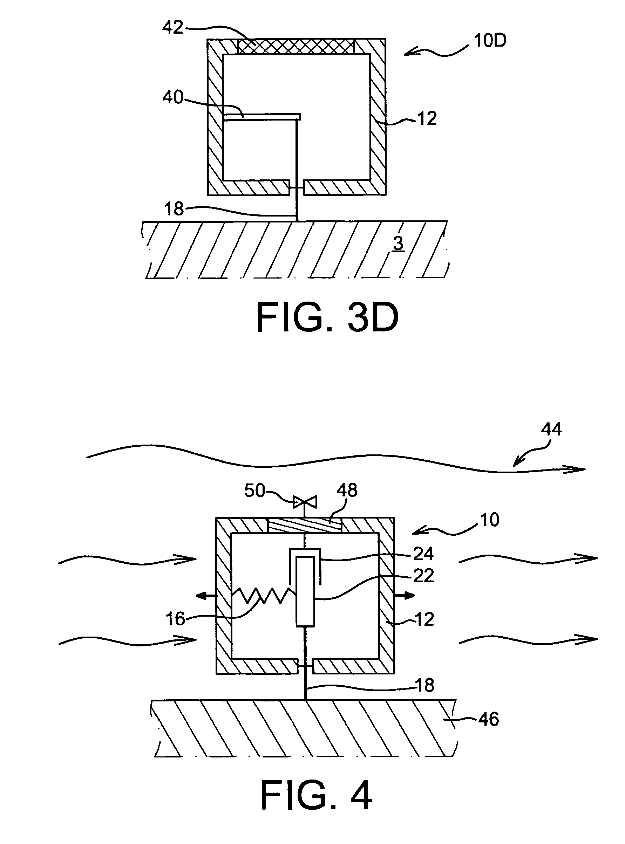

La figure 3D illustre une conversion en énergie thermique : le dispositif 10D comprend une première partie mobile 12 reliée à une deuxième partie fixe 18 par une poutre 40 qui subit des flexions dues aux mouvements entre ses deux extrémités. De telles flexions se traduisent par un échauffement plus ou moins important du matériau constituant la poutre. Il est possible de détecter cet échauffement par une caméra infrarouge par exemple ; dans ce cas, avantageusement, des portions du boîtier 12, voire une paroi entière, sont composées de matériau 42 transparent au rayonnement infrarouge. Pour augmenter l'énergie dégagée par la poutre 40, il est possible de lester ses extrémités, notamment en alourdissant le boîtier 12, par exemple par un système de stockage de l'énergie, ou de choisir le matériau la constituant ; en particulier, un matériau plus rigide est souvent plus dissipateur thermique.

Bien que représentés en fonctionnement par solidarisation avec un support mobile 3 et dans un environnement immobile par ailleurs, les dispositifs selon l'invention peuvent aussi être utilisés dans un environnement fluctuant, en particulier comprenant des fluides en mouvement entourant le boîtier 12.

En effet, la partie mobile, située à l'extérieur du dispositif, est sensible aux possibles fluctuations (écoulements laminaires, turbulents, ...) des fluides l'entourant (air, eau, ...), ce qui permet alors au dispositif de pouvoir récupérer de l'énergie mécanique provenant du déplacement des fluides, et ce avec ou sans mouvements du support. L'ensemble de la surface du dispositif 10 pouvant alors être utilisé, l'énergie récupérable peut augmenter de manière significative, sans ajout d'ailettes ou autres éléments sans fonction utile à l'extérieur du dispositif. Par exemple, dans le cas où le dispositif comporte un système de transmission de données vers ou depuis lui-même, la simple antenne servant à cette fonction peut représenter à elle seule une bonne surface de capture d'efforts provenant des fluides entourant le système.

Tel que représenté sur la figure 4 pour un dispositif du type capacitif similaire à celui de la figure 3A, le boîtier 12 est placé dans un fluide 44, liquide ou gazeux, en mouvement. La partie fixe 18, 22 est solidarisée à un support 46, fixe également par rapport au fluide 44. La partie mobile comprend un système d'exploitation de l'énergie électrique 48, dans le cadre illustré intégré à la paroi du boîtier 12. Par ailleurs, le système d'exploitation 48 fonctionne également comme une station de mesure qui émet sous forme électromagnétique la mesure vers une base déportée par l'intermédiaire d'une antenne papillon 50. Les mouvements du fluide 44 entourant le dispositif 10 sont transmis à la partie mobile de la capacité variable via l'antenne papillon 50 servant aux transmissions de données et qui lui est solidaire.

Le dispositif selon l'invention permet donc de récupérer l'énergie d'origine mécanique, avec conversion sous la forme d'énergie voulue selon tout principe de conversion : les dispositifs illustrés ne sont que des exemples de possibilités. Par ailleurs, le dispositif selon l'invention permet de récupérer l'énergie provenant des mouvements de son support et/ou des fluides l'entourant.

Par exemple, sur une structure réalisée à base de silicium, on peut avoir :

- Pour la structure classique, le poids de la partie mobile interne est de 2,1 g et il se décompose en 0,1 g de silicium et 2 g de tungstène pour alourdir la masse en mouvement ; le poids de la partie fixe externe, comprenant au minimum le boîtier et l'électronique, est de 10 g.
- Pour la structure réalisée selon l'invention, le poids de la partie interne fixe n'est plus que de 0,1 g puisque l'alourdissement en tungstène n'est plus nécessaire ; la partie externe mobile est comparable en poids et en constituants à celle de la structure classique.

En conséquence, la nouvelle structure est plus légère de 2 g tout en permettant de pouvoir récupérer au mininum 5 fois plus d'énergie, c'est-à-dire le rapport du poids des masses mobiles.

Le principe de récupération d'énergie d'origine mécanique concerne la mise en suspension de la partie de plus grande masse. L'augmentation de la masse en mouvement est par ailleurs possible sans augmenter la masse totale du dispositif de récupération ni son volume, en plaçant dans et sur la partie en suspension tout ou partie des différents éléments pouvant composer le dispositif, sans adjonction de masses inactives et inutiles à son fonctionnement. En ce qui concerne la capture des efforts des fluides entourant le dispositif, de façon similaire, la surface de capture peut être augmentée sans adjonction d'éléments inutiles du type ailettes, en utilisant les constituants actifs du dispositif.

Il est entendu que les divers éléments et modes de réalisations présentés peuvent être combinés de façon différente, et que des alternatives aux différents composants font partie de l'invention.

## Revendications

1. Dispositif (10) de récupération d'énergie à partir d'un environnement (3, 44) en mouvement, ledit dispositif comprenant : une première et une deuxième parties (12, 14) mobiles l'une par rapport à l'autre, des premiers moyens (16) pour relier de façon mobile la première à la deuxième partie, des deuxièmes moyens (18) pour relier de façon rigide la deuxième partie (14) à un support (3, 46), **caractérisé en ce que** la première partie (12) a une masse supérieure à la masse de la deuxième partie (14) et la première partie comprend un boîtier (12) dans lequel est contenue la deuxième partie (14).

2. Dispositif selon la revendication 1 dans lequel les deuxièmes moyens comportent une liaison rigide (18) traversant le boîtier (12).

3. Dispositif selon la revendication 2 comprenant une membrane étanche (20) entre le boîtier (12) et la liaison rigide (18).

4. Dispositif selon l'une des revendications 1 à 3 comprenant une antenne (50) située à l'extérieur du boîtier (12).

5. Dispositif selon l'une des revendications 1 à 4 dans lequel les premiers moyens comprennent un système d'articulation (32, 34) et la première partie comprend un piston (36).

6. Dispositif selon l'une des revendications 1 à 4 dans lequel les premiers moyens comprennent une poutre (40) dont la déformation génère une énergie thermique.

7. Dispositif selon l'une des revendications 1 à 4 dans lequel chacune des première et deuxième parties comprend une électrode (22, 24), les premiers moyens comportant un élément faisant ressort (16) .

**8.** Dispositif selon l'une des revendications 1 à 4 dans lequel les premiers moyens (30) comprennent au moins partiellement un matériau piézoélectrique.

**9.** Dispositif selon l'une des revendications 7 à 8 dans lequel la première partie comprend un élément électronique (26) d'exploitation de l'énergie électrique issue de la conversion du mouvement relatif des première et deuxième parties.

**10.** Dispositif selon l'une des revendications 5 à 9 dans lequel la première partie comprend des moyens pour stocker l'énergie.

**11.** Dispositif selon l'une des revendications 1 à 10 dans lequel la première partie comprend un capteur et/ou un système de gestion de l'énergie.

**12.** Utilisation d'un dispositif selon l'une des revendications 1 à 11, les deuxièmes moyens (18) étant connectés à un support mobile (3).

**13.** Utilisation d'un dispositif selon l'une des revendications 1 à 11, le dispositif (10) étant situé dans un fluide en mouvement (44)

**14.** Utilisation selon la revendication 13 dans laquelle et les deuxièmes moyens (18) sont connectés à un support (46) fixe par rapport au fluide (44).

**Claims**

**1.** A device (10) for recovering energy from an environment (3, 44) in movement, wherein said device includes first and a second part (12, 14) movable in relation to each other, first means (16) for linking the first part to the second part in a mobile way, and second means (18) to link the second part (14) to a support (3, 46) in a rigid way, **characterised in that** the first part (12) has a mass that is greater than the mass of the second part (14), and the first part includes a case (12) in which the second part (14) is contained.

**2.** A device according to claim 1, in which the second means include a rigid link (18) passing through the case (12).

**3.** A device according to claim 2, comprising a sealing membrane (20) between the case (12) and the rigid link (18).

**4.** A device according to one of claims 1 to 3, comprising an antenna (50) located outside of the case (12).

**5.** A device according to one of claims 1 to 4, in which the first means comprise an articulation system (32, 34) and the first part comprises a piston (36).

**6.** A device according to one of claims 1 to 4, in which the first means comprise a beam (40) whose deformation generates thermal energy.

**7.** A device according to one of claims 1 to 4, in which each of the first and second parts includes an electrode (22, 24), with the first means comprising an element acting as a spring (16).

**8.** A device according to one of claims 1 to 4, in which the first means comprises (30) at least partially include a piezoelectric material.

**9.** A device according to either of claims 7 to 8, in which the first part comprises an electronic element (26) for the operation of the electrical energy obtained from conversion of the relative movement of the first and second parts.

**10.** A device according to one of claims 5 to 9, in which the first part comprises means for storing the energy.

**11.** A device according to one of claims 1 to 10, in which the first part comprises a sensor and/or an energy management system.

**12.** Use of a device according to one of claims 1 to 11, where the second means (18) are connected to a mobile support (3).

**13.** Use of a device according to one of claims 1 to 11, where the device (10) is located in a fluid in movement (44).

**14.** Use according to claim 13, in which the second means (18) are connected to a support (46) fixed to the fluid (44).

**Patentansprüche**

**1.** Vorrichtung (10) zur Energiegewinnung aus einer sich bewegenden Umgebung (3, 44), wobei die genannte Vorrichtung umfasst: einen ersten und einen zweiten Teil (12, 14), gegenseitig beweglich, und erste Einrichtungen (16), um den ersten und den zweiten Teil auf bewegliche Weise zu verbinden, sowie zweite Einrichtungen (18), um den zweiten Teil (14) mit einem Träger (3, 46) zu verbinden,
**dadurch gekennzeichnet, dass** der erste Teil (12) eine größere Masse hat als der zweite Teil (14), und der erste Teil ein Gehäuse (12) umfasst, in dem der zweite Teil (14) enthalten ist.

**2.** Vorrichtung nach Anspruch 1, bei der die zweiten Einrichtungen eine das Gehäuse (12) durchquerende starre Verbindung (18) umfassen.

**3.** Vorrichtung nach Anspruch 2, mit einer dichten Membran (20) zwischen dem Gehäuse (12) und der starren Verbindung (18).

**4.** Vorrichtung nach einem der Ansprüche 1 bis 3, mit einer außerhalb des Gehäuses (12) befindlichen Antenne (50).

**5.** Vorrichtung nach einem der Ansprüche 1 bis 4, bei der die ersten Einrichtungen ein Gelenksystem (32, 34) umfassen und der erste Teil einen Kolben (36) umfasst.

**6.** Vorrichtung nach einem der Ansprüche 1 bis 4, bei der die ersten Einrichtungen einen Balken (40) umfassen, dessen Verformung eine Wärmeenergie erzeugt.

**7.** Vorrichtung nach einem der Ansprüche 1 bis 4, bei der die ersten und die zweiten Einrichtungen jeweils eine Elektrode (22, 24) umfassen, die ersten Einrichtungen dabei ein federndes Element (16) umfassen.

**8.** Vorrichtung nach einem der Ansprüche 1 bis 4, bei der die ersten Einrichtungen (30) wenigstens partiell ein piezoelektrisches Material umfassen.

**9.** Vorrichtung nach einem der Ansprüche 7 bis 8, bei der der erste Teil ein elektronisches Element (26) zur Verwertung der elektrischen Energie umfasst, die aus der Umwandlung der Relativbewegung des ersten und zweiten Teils stammt.

**10.** Vorrichtung nach einem der Ansprüche 5 bis 9, bei der der erste Teil Energiespeichereinrichtungen umfasst.

**11.** Vorrichtung nach einem der Ansprüche 1 bis 10, bei der der erste Teil einen Sensor und/oder cm Energieverwaltungssystem umfaßt.

**12.** Anwendung einer Vorrichtung nach einem der Ansprüche 1 bis 11, wobei die zweiten Einrichtungen (18) mit einem beweglichen Träger (3) verbunden sind.

**13.** Anwendung einer Vorrichtung nach einem der Ansprüche 1 bis 11, wobei die Vorrichtung (10) sich in einem bewegten Fluid (44) befindet.

**14.** Anwendung nach Anspruch 13, bei der die zweiten Einrichtungen (18) mit einem in Bezug auf das Fluid (44) ortsfesten Träger (46) verbunden sind.

**FIG. 1**

**FIG. 2A**

**FIG. 2B**

26 — 16
12
22
24
18
3

## FIG. 3A

26
30
12
18
3

## FIG. 3B

38
36
34
32
14
12
18
3

## FIG. 3C

FIG. 3D

FIG. 4

**EP 1 766 233 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0008237 A
- GB 2311171 A
- DE 29618105 U
- DE 19929341